(19) Europäisches Patentamt / European Patent Office / Office européen des brevets

(11) **EP 3 797 846 B1**

(12) **FASCICULE DE BREVET EUROPEEN**

(45) Date de publication et mention
de la délivrance du brevet:
**22.05.2024 Bulletin 2024/21**

(21) Numéro de dépôt: **19306206.4**

(22) Date de dépôt: **26.09.2019**

(51) Classification Internationale des Brevets (IPC):
**A23L 33/105** (2016.01)   **A23F 5/48** (2006.01)
**B01D 11/04** (2006.01)

(52) Classification Coopérative des Brevets (CPC):
**B01D 11/0496; A23F 5/48; A23L 33/105;
B01D 11/0484; B01D 11/0492**

(54) **EXTRACTION MICROFLUIDIQUE A PARTIR D'EXTRAIT VEGETAL**

MIKROFLUIDEXTRAKTION AUS EINEM PFLANZENEXTRAKT

MICROFLUIDIC EXTRACTION FROM PLANT EXTRACT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**31.03.2021 Bulletin 2021/13**

(73) Titulaire: **Chanel Parfums Beauté
92200 Neuilly-sur-Seine (FR)**

(72) Inventeurs:
 • **RILHAC, Vincent
 93694 PANTIN CEDEX (FR)**
 • **TORIBIO, ALIX
 93694 PANTIN CEDEX (FR)**

(74) Mandataire: **Plasseraud IP
66, rue de la Chaussée d'Antin
75440 Paris Cedex 09 (FR)**

(56) Documents cités:
**WO-A1-96/12541     CN-U- 206 372 553
US-B1- 6 355 693**

 • QIN WEIWEI ET AL: "A successive laminar flow
extraction for plant medicine preparation by
microfluidic chip", MICROFLUIDICS AND
NANOFLUIDICS, SPRINGER, DE, vol. 23, no. 4, 30
mars 2019 (2019-03-30), pages 1-8, XP036755521,
ISSN: 1613-4982, DOI:
10.1007/S10404-019-2228-8 [extrait le 2019-03-30]

 • XUAN MU ET AL: "Selectively modified
microfluidic chip for solvent extraction of Radix
Salvia Miltiorrhiza using three-phase laminar flow
to provide double liquid-liquid interface area",
MICROFLUIDICS AND NANOFLUIDICS,
SPRINGER, BERLIN, DE, vol. 9, no. 2-3, 24
décembre 2009 (2009-12-24), pages 365-373,
XP019811137, ISSN: 1613-4990

 • KISHORE K. R. TETALA ET AL: "A three-phase
microfluidic chip for rapid sample clean-up of
alkaloids from plant extracts", LAB ON A CHIP,
vol. 9, no. 14, 1 janvier 2009 (2009-01-01), page
2085, XP055676624, ISSN: 1473-0197, DOI:
10.1039/b822106e

 • GONÇALVES DANIEL ET AL: "Fractionation of
orange essential oil using liquid-liquid
extraction: Equilibrium data for model and real
systems at 298", FLUID PHASE EQUILIBRIA,
ELSEVIER, AMSTERDAM, NL, vol. 399, 28 April
2015 (2015-04-28), pages 87-97, XP029242301,
ISSN: 0378-3812, DOI:
10.1016/J.FLUID.2015.04.022

 • Koshima Cristina C. ET AL: "Fractionation of
Bergamot and Lavandin Crude Essential Oils by
Solvent Extraction: Phase Equilibrium at 298.2
K", JOURNAL OF CHEMICAL AND ENGINEERING
DATA., vol. 60, no. 1, 19 December 2014
(2014-12-19), pages 37-46, XP093031819, US
ISSN: 0021-9568, DOI: 10.1021/je500581h

 • Arce Alberto ET AL: "Citrus Essential Oil
Deterpenation by Liquid-Liquid Extraction",
Canadian Journal of Chemical Engineering, vol.
83, no. 2, 1 April 2005 (2005-04-01), pages 366-370,
XP093031825, ISSN: 0008-4034, DOI:
10.1002/cjce.5450830226

**Description**

**Domaine technique**

L'invention relève du domaine de l'extraction liquide-liquide effectuée dans des conditions qui relèvent du domaine de la microfluidique. L'invention trouve en particulier son application dans le secteur cosmétique.

**Technique antérieure**

Les principes actifs en cosmétique jouent des rôles très variés. Ils permettent d'apporter à une composition cosmétique un caractère par exemple hydratant, antirides, odorant, de soin ou visuel. Il est souvent souhaitable de concentrer des principes actifs en solution avant de pouvoir les utiliser. L'extraction liquide-liquide ou la distillation moléculaire sont des méthodes classiques et connues de l'homme du métier.

La distillation moléculaire est une distillation fractionnée sous vide poussée. Elle est complexe à mettre en oeuvre et nécessite beaucoup d'énergie pour fonctionner. La distillation moléculaire est réalisée à haute température, permet d'isoler des molécules vaporisables mais peut cependant entraîner la dégradation des principes actifs extraits.

L'extraction liquide-liquide est un procédé de séparation classique en chimie. Il consiste en l'extraction par transfert d'une molécule d'intérêt (ou principe actif, les deux ayant la même signification dans la présente description) contenue dans un premier liquide (le raffinat) vers un second liquide non miscible avec le premier (le solvant d'extraction). Au terme de l'extraction, un extrait formé du solvant enrichi en molécule d'intérêt et un raffinat appauvri en molécules d'intérêt sont récupérés. Ainsi, la concentration en molécule d'intérêt dans le solvant est augmentée.

L'extraction liquide-liquide classique se produit par exemple dans une ampoule à décanter dont la contenance est adaptée en fonction des besoins. Les deux liquides sont mélangés dans l'ampoule à décanter puis laisser au repos jusqu'à former deux phases distinctes qu'il est ensuite possible de séparer.

L'extraction liquide-liquide classique discutée plus haut présente cependant plusieurs désavantages. Notamment, un tel système d'extraction ne permet pas une extraction continue. En effet, les différentes extractions sont réalisées dans différents contenants, par exemple plusieurs ampoules à décanter, de quantités définies. Les extractions sont alors dites réalisées en mode « batch ». Plusieurs extractions et décantations sont donc nécessaires avant d'obtenir la quantité de solvant enrichi souhaitée. De plus, une main d'oeuvre importante est nécessaire pour transvaser les réactifs et produits d'un contenant à un autre.

En outre, la surface de contact entre les deux phases mises en oeuvre dans une extraction fluide-fluide classique est limitée à la taille du contenant dans lequel se trouvent lesdites phases. De même, la diffusion des molécules d'intérêt d'une phase à une autre est limitée à cause des grands volumes mis en jeu. Enfin, en fonction des liquides utilisés, par exemple des extraits huileux, des émulsions peuvent apparaître rendant d'autant plus difficile la séparation et longue la décantation des phases. La récupération du solvant enrichi et du raffinat est aussi négativement impactée puisque du raffinat peut se retrouver dans le solvant et du solvant dans le raffinat.

Il est donc important de trouver une nouvelle méthode permettant d'extraire efficacement des actifs parfois rares et/ou fragiles en quantité suffisante, satisfaisant par exemple les besoins de l'industrie cosmétique. Il est aussi important de trouver une méthode pouvant être mise en oeuvre à température ambiante de sorte à ne pas dégrader les principes actifs extraits.

Le domaine de la microfluidique est un domaine récent aux frontières de la physique et de la chimie mettant en oeuvre des volumes de liquide très faibles, par exemple de l'ordre du micro-litre ($\mu$L) jusqu'au femto-litre (fL). De telles dimensions permettent de satisfaire facilement plusieurs contraintes de mécanique des fluides. Par exemple l'écoulement obtenu dans un système microfluidique est facilement laminaire du fait de l'expression du nombre de Reynolds dépendant directement des dimensions du système. De même, la diffusion des molécules d'intérêt est favorisée par rapport à leur convection du fait de l'expression du nombre de Peclet dépendant aussi directement des dimensions du système.

L'extraction microfluidique est un procédé d'extraction liquide-liquide qui consiste à mettre en contact deux fluides au sein de canaux dont les dimensions sont de l'ordre du centième de micromètre (0,01 $\mu$m) jusqu'au millimètre (mm).

Les documents suivants font partie de l'état de la technique:
QIN WEIWEI ET AL: "A successive laminar flow extraction for plant medicine préparation by microfluidic chip",MICROFLUIDICS AND NANOFLUIDICS, SPRINGER, DE, vol. 23, no. 4, 30 mars 2019 (2019-03-30), pages 1-8; XUAN MU ET AL: "Selectively modified microfluidic chip for solvent extraction of Radix Salvia Miltiorrhiza using three-phase laminar flow to provide double liquid-liquid interface area",MICROFLUIDICS AND NANOFLUIDICS, SPRINGER, BERLIN, DE, vol. 9, no. 2-3, 24 décembre 2009 (2009-12-24), pages 365-373; KISHORE K. R. TETALA ET AL: "A three-phase microfluidic chip for rapid sample clean-up of alkaloids from plant extracts",LAB ON A CHIP, vol. 9, no. 14, 1 janvier 2009 (2009-01-01), page 2085; WO 96/12541 A1, CN 206 372 553 U, GONÇALVES DANIEL ET AL: "Fractionation of

# EP 3 797 846 B1

orange essential oil using liquid-liquid extraction: Equilibrium data for model and real systems at 298",FLUID PHASE EQUILIBRIA, ELSEVIER, AMSTERDAM, NL, vol. 399, 28 avril 2015 (2015-04-28), pages 87-97; Koshima Cristina C. ET AL: "Fractionation of Bergamot and Lavandin Crude Essential Oils by Solvent Extraction: Phase Equilibrium at 298.2 K",JOURNAL OF CHEMICAL AND ENGINEERING DATA., vol. 60, no. 1, 19 décembre 2014 (2014-12-19), pages 37-46; Arce Alberto ET AL: "Citrus Essential Oil Deterpenation by Liquid-Liquid Extraction",Canadian Journal of Chemical Engineering, vol. 83, no. 2, 1 avril 2005 (2005-04-01), pages 366-370 et US 6 355 693 B1.

## Exposé de l'invention

Les inventeurs ont découvert de façon inattendue qu'un procédé d'extraction microfluidique utilisant une puce microfluidique dite « en double y » permettait d'assurer une extraction en continue de principe actif avec une efficacité d'enrichissement aussi importante qu'un procédé classique dit en mode « batch » ou d'une distillation moléculaire.

L'extraction microfluidique présente en outre l'avantage de pouvoir être opérée à température ambiante et ainsi d'éviter la dégradation des molécules d'intérêt extraites. Enfin, l'extraction microfluidique présente un encombrement et une consommation énergétique plus faible que des procédés d'extractions classiques utilisés jusqu'à ce jour.

L'invention a ainsi pour objet un procédé d'extraction microfluidique de molécules d'intérêt à partir d'un extrait végétal liquide comprenant :

- une puce microfluidique 10 avec un circuit en double Y, comprenant deux entrées E1 et E2, deux sorties S1 et S2 et un canal principal,
- un premier réservoir R1 comprenant l'extrait végétal liquide F1, un second réservoir R2 comprenant un solvant d'extraction F2 des molécules d'intérêt non miscible avec l'extrait végétal liquide F1, lesdits premier et second réservoirs R1, R2 étant chacun en liaison fluide avec les entrées E1 et E2 de la puce microfluidique 10,
- un contrôleur de pression 100 apte à mettre sous pression ledit premier extrait végétal liquide F1 et ledit solvant d'extraction F2,
- un premier collecteur C1 en connexion fluide avec la puce microfluidique 10 dans lequel est récupéré l'extrait végétal liquide F1 appauvri en molécules d'intérêt,
- un second collecteur C2 en connexion fluide avec la puce microfluidique 10 dans lequel est récupéré le solvant d'extraction F2 enrichi en molécules d'intérêt,
    ledit procédé d'extraction comprenant les étapes suivantes,

    a) le contrôle des pressions P1 et P2 afin de soumettre l'extrait végétal liquide F1 à une pression P1 et le solvant d'extraction F2 à une pression P2, de manière à ce que l'interface entre les deux fluides se positionne au niveau du point de jonction des entrées E1 et E2,
    b) la mise en contact de l'extrait végétal liquide F1 et du solvant d'extraction F2 dans le canal principal pendant une durée permettant l'extraction des molécules d'intérêt,
    c) la récupération du solvant d'extraction F2 enrichi en molécules d'intérêt, et
    d) optionnellement, l'évaporation du solvant d'extraction F2,

    caractérisé en ce que l'extrait végétal est une huile végétale, le solvant d'extraction est l'éthanol.

L'extraction selon le procédé de l'invention peut être opérée avantageusement à température ambiante, de préférence entre 20 et 30°C, de préférence entre 22 et 27°C.

Au contraire des extractions traditionnelles de distillation moléculaire qui sont opérées à des températures plus élevées pouvant atteindre jusqu'à 250°C; la mise en oeuvre d'une extraction microfluidique selon l'invention à température ambiante permet d'éviter des dégradations thermiques néfastes pour les extraits végétaux.

Puce microfluidique

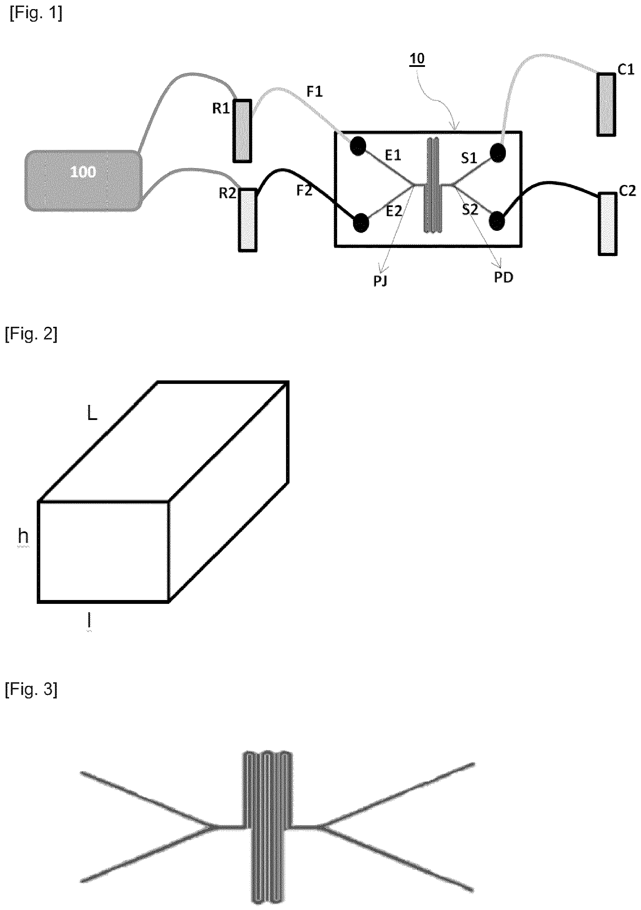

Une puce microfluidique dite « en double Y » mise en oeuvre dans le procédé de l'invention est illustré de façon non limitative par le schéma de la figure 1.

La puce microfluidique **10** de la figure 1 présente deux entrées **E1** et **E2** formées par deux canaux distincts se joignant en un point dit « point de jonction » **PJ** pour ne former alors plus qu'un seul canal dit « canal principal ».

Ledit canal principal se disjoint au « point de disjonction » **PD** en deux nouveaux canaux distincts formant les deux sorties **S1** et **S2** de la puce microfluidique **10.**

Dans la présente demande, le terme « connexion fluide » se réfère à un moyen de connexion permettant le transfert du fluide **F1** ou **F2** entre les différents éléments auxquels il se réfère.

Les deux entrées **E1** et **E2** peuvent être en connexion fluide via par exemple des tuyaux avec respectivement les réservoirs **R1** et **R2** de sorte que les fluides **F1** et **F2** puissent circuler dans la puce microfluidique **10**.

De même, les deux sorties **S1** et **S2** peuvent être en connexion fluide via par exemple des tuyaux avec respectivement les collecteurs **C1** et **C2** de sorte que les fluides **F1** et **F2** puissent être évacués de la puce microfluidique **10**.

Selon un mode de réalisation de la présente invention, l'entrée **E1** peut être reliée à un premier réservoir **R1** contenant un fluide **F1,** ledit fluide **F1** est par exemple un extrait végétal. L'entrée **E2** peut être reliée à un second réservoir **R2** contenant un fluide **F2** différent du premier fluide, ledit fluide **F2** est par exemple un solvant d'extraction. La sortie **S1** peut être reliée à un premier collecteur **C1** pour recevoir le fluide **F1** appauvri ou enrichi en molécule d'intérêt en sortie de la puce microfluidique. Dans le cas où le fluide **F1** est l'extrait végétal, ledit premier collecteur recueille alors le raffinat d'extrait végétal appauvri en molécule d'intérêt. La sortie **S2** peut être reliée à un second collecteur **C2** pour recevoir le fluide **F2** appauvri ou enrichi en molécule d'intérêt. Dans le cas où le fluide **F2** est un solvant d'extraction, ledit second collecteur **C2** recueille alors le solvant d'extraction enrichi en molécule d'intérêt.

Il est considéré dans la suite de la description que le fluide **F1** est l'extrait végétal liquide et le fluide **F2** est le solvant d'extraction.

Le canal principal peut être de formes variées, la coupe transversale dudit canal principal peut être de façon non limitative un carré, un cercle, un demi-cercle, un rectangle, un losange, un polygone régulier, un polygone irrégulier. De préférence, la coupe transversale du canal principal de la puce microfluidique **10** est de forme rectangulaire.

Le schéma de la figure 2 montre une vue en perspective d'un canal principal de forme rectangulaire caractérisé par une profondeur **h,** une largeur **l** et un volume total **V**. Ledit volume total dudit canal principal est considéré entre le point de jonction **PJ** et le point de disjonction **PD**.

Le canal principal de la puce microfluidique mis en oeuvre dans le procédé de l'invention peut présenter une largeur l comprise entre 50 et 500 $\mu$m, de préférence entre 100 et 300$\mu$m, et de préférence de 200$\mu$m,

- une profondeur **H** comprise entre 1 et 800$\mu$m, de préférence 5 à 500$\mu$m, plus préférentiellement 10 à 200$\mu$m, mieux encore 50 et 150 $\mu$m, et plus particulièrement 100$\mu$m,
- un volume total **V** du canal entre le point de jonction PJ et la disjonction des deux canaux de sortie du Y au point de disjonction PD compris entre 0,1 $\mu$L et 20$\mu$L, de préférence 0,2$\mu$L et 10$\mu$L, plus préférentiellement 0,3 et 5 $\mu$L, mieux encore 0,4 et 1,5 $\mu$L, plus particulièrement 1 $\mu$L.

L'extraction microfluidique présente notamment l'avantage d'augmenter la surface de contact entre les fluides au sein du canal principal et ainsi optimise la diffusion des molécules d'intérêt d'un liquide à un autre.

Le canal principal de la puce microfluidique **10** peut présenter en outre une géométrie globale dans le plan de la puce microfluidique de la forme de cercles, de carrés ou losanges concentriques, d'une ligne et de préférence de la forme d'un serpentin.

La puce microfluidique **10** de la figure 3 présente de façon non limitative un exemple de canal principal dont la géométrie globale dans le plan de la puce microfluidique **10** est de la forme d'un serpentin.

La géométrie globale dans le plan du canal peut permettre par exemple d'optimiser l'encombrement du système.

L'extraction selon le procédé de l'invention présente en outre l'avantage de pouvoir être réalisée en parallèle, c'est-à-dire que N puces microfluidique avec un circuit en « double y » peuvent être opérées en parallèle, avec N un entier compris entre 1 et 200 000, de préférence entre 500 et 200 000, plus préférentiellement entre 1 000 et 100 000.

Un procédé d'extraction avec plusieurs puces microfluidiques en parallèle présente l'avantage d'augmenter considérablement la capacité de traitement du système. Un système comprenant par exemple 100 000 puces microfluidiques opérées en parallèle peut atteindre un débit global (ledit débit global correspond à la somme des débits d'extrait de solvant d'extraction enrichi en molécules d'intérêt) d'au moins 16.2 kg/h, soit quasiment 10 fois plus qu'un traitement classique comme par exemple la distillation moléculaire de laboratoire. Il existe des dispositifs de distillation moléculaire qui permettent de distiller des tonnes de produit par jour mais de tels dispositifs sont extrêmement encombrements et coûteux.

Un système comprenant par exemple 100 000 puces microfluidiques opérées en parallèle permet en outre un gain de place vis-à-vis des procédés d'extraction classiques discutés plus haut.

La présente invention permet avantageusement de connecter 100 000 puces microfluidiques opérées en parallèle dans un espace pouvant tenir sur seulement 1 m$^2$ au sol.

La puce microfluidique **10** mise en oeuvre dans le procédé de l'invention peut être réalisée dans un matériau choisi parmi le verre, le silicium ou un polymère, de préférence le silicone et de préférence le PDMS.

Contrôleur de pression

La puce microfluidique selon l'invention est en outre reliée à un contrôleur de pression **100**. Ledit contrôleur de pression **100** permet avantageusement d'appliquer une pression au dixième, de préférence au centième de millibar près pour maîtriser les écoulements des fluides **F1** et **F2** au sein de la puce microfluidique.

Ledit contrôleur de pression **100** est relié au premier réservoir **R1** et au premier collecteur **C1** de sorte que le fluide **F1** est soumis à une pression **P1.**

Ledit contrôleur de pression **100** est relié au premier réservoir **R2** et au premier collecteur **C2** de sorte que le fluide **F2** est soumis à une pression **P2.**

Ledit contrôleur de pression **100** est par exemple relié à l'aide de tuyau hermétique ne laissant pas s'échapper l'air aux réservoirs R1 et R2 de façon à y appliquer une pression **P1** et **P2.**

La pression appliquée indépendamment aux fluides **F1** et **F2** a un impact direct sur le débit desdits fluides aux niveaux des entrées **E1** et **E2** et des sorties **S1** et **S2** de la puce microfluidique **10.** De manière générale, la pression et le débit sont liés de façon linéaire selon l'équation Math. 1 ci-dessous.

[Math. 1]

$$P = R.Q$$

P étant la pression à laquelle le fluide est soumis et s'exprime par exemple en millibar (mbar).

Q est le débit auquel le fluide s'écoule et s'exprime par exemple en micro litre par seconde (μL/s).

R est un coefficient homogène à une pression divisée par un débit et peut se mesurer de façon expérimentale connue de l'homme du métier.

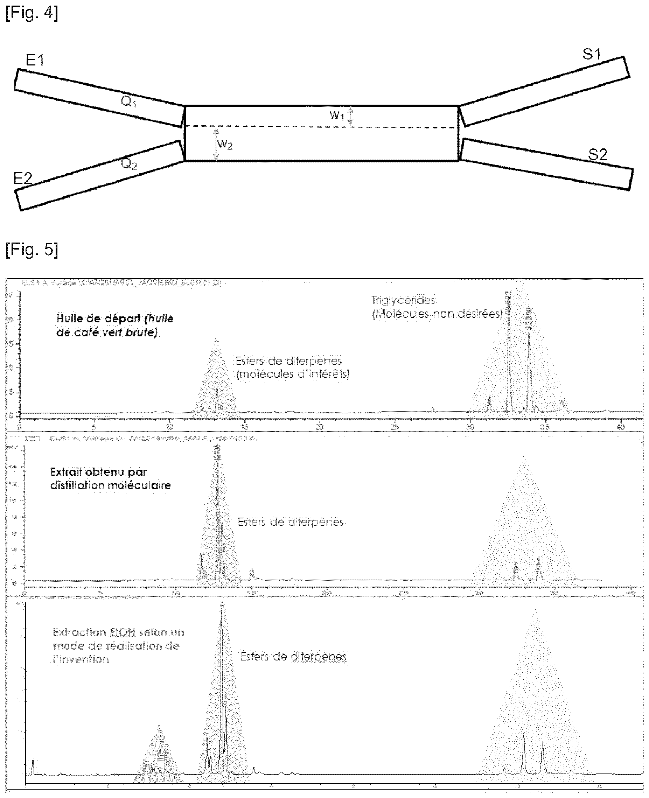

La pression a également un impact direct sur la disposition des fluides au sein du canal. La figure 4 présente un schéma simplifié d'une puce microfluidique en double Y. Q1 est le débit auquel s'écoule le fluide F1 dans la puce microfluidique et Q2 est le débit auquel s'écoule le fluide F2. w1 est la largeur occupée dans le canal principal par le fluide **F1** lorsque le canal est vu de haut et $w_2$ est la largeur occupée dans le canal principal par le fluide **F2** lorsque le canal est vu de haut.

Afin d'optimiser la diffusion au sein du canal, les largeurs occupées par les deux fluide **F1** et **F2** au sein du canal vue de haut sont avantageusement égales. De façon avantageuse, l'égalité suivante est respectée : w₁ = w₂.

En outre, l'égalité Math. 2 suivante est toujours respectée au sein du canal principal de la puce microfluidique:

[Math. 2]

$$\frac{w1}{w2} = \frac{\mu1.Q1.\rho2}{\mu2.Q2.\rho1}$$

$w_1$ et $w_2$ sont les largeurs occupées respectivement par les fluides **F1** et **F2** au sein du canal principal de la puce microfluidique vue de haut, $\mu_1$ et $\mu_2$ sont les viscosités dynamiques respectivement des fluides **F1** et **F2**, $Q_1$ et $Q_2$ sont les débits auxquels s'écoulent respectivement les fluides **F1** et **F2**, $\rho_1$ et $\rho_2$ sont les masses volumiques respectives des fluides **F1** et **F2**

Si les fluides **F1** et **F2** évoluent dans le même système, la combinaison des égalités selon les équations Math. 1 et Math, 2 permet d'aboutir à l'égalité selon l'équation Math. 3 suivante.

[Math. 3]

$$\frac{w1}{w2} = \frac{P1}{P2}$$

$w_1$ et $w_2$ sont les largeurs occupées respectivement par les fluides **F1** et **F2** au sein du canal principal de la puce microfluidique vue de haut ; **P1** et **P2** sont les pressions auxquelles les fluides **F1** et **F2** sont soumis.

Dans l'idéal, les largeurs $w_1$ et $w_2$ au sein du canal principal de la puce microfluidique doivent être égales en sortie du canal principal afin d'assurer une bonne séparation des fluides enrichis et appauvris en molécules d'intérêt. Afin de satisfaire cette égalité, le respect de l'équation Math. 3 implique que les pressions **P1** et **P2** respectivement appliquées aux fluides **F1** et **F2** doivent être égales.

Les inventeurs ont découvert de façon surprenante qu'appliquer deux pressions **P1** et **P2** identiques aux fluides **F1** et **F2** ne donne pas l'effet escompté par la théorie expliquée plus haut. En effet, les inventeurs ont observé au niveau du point de disjonction **PD** des largeurs $w_1$ et $w_2$ différentes, de sorte qu'une quantité du fluide **F2** se mélange avec le fluide **F1** en sortie **S1**.

Cette observation peut s'expliquer en partie par les pertes de charge subies par les fluides. Ces pertes de charge dépendent en grande partie des fluides considérés, du contact entre les fluides et avec les parois du système, de la géométrie du canal ainsi que des débits auxquels s'écoulent les fluides **F1** et **F2**.

Les inventeurs ont découvert plusieurs couples de pressions (**P1, P2**) permettant de satisfaire la condition $w_1$ = $w_2$ tout le long du canal principal et en particulier au niveau du point de disjonction **PJ** de la puce microfluidique.

Selon un mode de réalisation de l'invention, le contrôleur de pression **100** est opéré de sorte que les fluides **F1** et **F2** sont respectivement soumis à des pressions (**P1, P2**) telles que :

**P1** est comprise entre 65 et 75,

**P2** est comprise entre 63 et 73 mbar, ou bien le contrôleur de pression **100** est opéré de sorte que les fluides **F1** et **F2** sont soumis à des pressions (**P1, P2**) telles que :

**P1** est comprise entre 190 et 210 mbar,

**P2** est comprise entre 186 et 206 mbar.

Aussi, selon un mode de réalisation de la présente invention, le contrôleur de pression **100** est opéré de sorte que le débit en sortie de la puce microfluidique du solvant d'extraction est compris entre 0,01 $\mu$L/s et 500 $\mu$L/s, de préférence entre 0,1 $\mu$L/s et 12 $\mu$L/s, plus préférentiellement entre 0,5 et 1 $\mu$L/s.

Aussi, selon un mode de réalisation de la présente invention, le contrôleur de pression 100 est opéré de sorte que le débit en sortie de la puce microfluidique de l'extrait végétal liquide est compris entre 0,001 $\mu$L/s et 500 $\mu$L/s, de préférence entre 0,005 $\mu$L/s et 10 $\mu$L/s, plus préférentiellement entre 0,005 et 0,01 $\mu$L/s.

Afin de s'assurer que le solvant enrichi en molécules d'intérêt récupéré dans le collecteur C2 n'est pas pollué par le raffinat d'extrait végétal appauvri obtenu en sortie S1, une marge de sécurité « a » peut être observée.

Dans le cas où une marge de sécurité « a » est observée, le contrôleur de pression est opéré à des couples de pression (**P1, P2**) satisfaisant la condition suivante $w_1$ = $a.w_2$ au niveau du point de disjonction ; $w_1$ et $w_2$ étant les largeurs occupées respectivement par les fluides **F1** et **F2** au sein du canal principal de la puce microfluidique **10, a** est une marge de sécurité, réel positif compris entre 0 et 1.

Dans le cas où une marge de sécurité est observée, **a** est compris entre 0,85 et 0,95, de préférence a vaut 0,9.

Selon un mode de réalisation de la présente invention, le contrôleur de pression **100** est choisi parmi des contrôleurs de pression du commerce, apte à satisfaire les conditions définies plus haut. Le contrôleur de pression de la présente invention est par exemple le contrôleur de pression Elveflow commercialisé par la société Elvelys.

Extrait végétal

L'extrait végétal est choisi en fonction de la molécule d'intérêt souhaitée.

L'extrait végétal utilisé dans le procédé d'extraction de la présente invention est un extrait huileux d'une partie de plante obtenu après filtration, par exemple l'huile de café.

Solvant d'extraction

Selon l'extrait végétal choisi, le solvant d'extraction est choisi en fonction de son affinité avec la molécule d'intérêt.

Selon un mode de réalisation de la présente invention, le solvant d'extraction est avantageusement non miscible avec l'extrait végétal liquide.

Le solvant d'extraction utilisé dans le procédé d'extraction de la présente invention est l'éthanol.

Le procédé d'extraction

Le procédé d'extraction selon l'invention peut comprendre une première étape a) consistant à opérer le contrôleur de pression **100** à un couple de pression **P1, P2** particulier afin de respectivement soumettre les fluides **F1** et **F2** aux pressions **P1** et **P2** de sorte à avoir une interface entre les deux fluides positionnés au niveau du point de jonction **PJ** de la puce microfluidique en double Y.

Selon les caractéristiques de la puce microfluidique, les caractéristiques du canal principal, la géométrie globale du canal principal et les débits auxquels sont soumis les fluides **F1** et **F2**, l'extrait végétal liquide **F1** et le solvant d'extraction **F2** sont mis en contact pendant une durée permettant l'extraction des molécules d'intérêt.

Le procédé d'extraction selon l'invention peut comprendre une seconde étape b) durant laquelle les fluides sont mis en contact pendant une durée permettant l'extraction des molécules d'intérêt. En particulier, le temps de contact est compris entre 5 et 300 secondes, de préférence 8 et 200 secondes, plus préférentiellement de 10 à 100 secondes, et encore plus préférentiellement de 50 à 70 secondes.

Plus la durée d'extraction est longue et plus le rendement massique d'extraction peut être élevé. Le rendement massique correspond à la masse d'extrait contenant les molécules d'intérêt dans le solvant d'extraction **F2** récupéré en sortie **S2** par rapport à la masse initiale d'extrait végétal liquide **F1** à l'entrée **E1.**

Un rendement massique satisfaisant est par exemple supérieur ou égal à 5%, de préférence supérieur ou égal à 10%, mieux autour de 15%.

Le procédé d'extraction selon l'invention comprend une troisième étape c) où le solvant d'extraction enrichi en molécule d'intérêt est récupéré et optionnellement réutilisé pour le procédé d'extraction.

Le procédé d'extraction selon l'invention peut par exemple être relié à un dispositif de purification permettant d'obtenir en continue des molécules d'intérêt tout en réutilisant le solvant d'extraction pour le procédé d'extraction.

Le procédé d'extraction selon l'invention peut comprendre une quatrième étape optionnelle d) dans laquelle le solvant d'extraction enrichi en molécule d'intérêt est évaporé.

Le solvant d'extraction enrichi en molécules d'intérêt peut en outre être soumis à différent traitements de purification visant à augmenter la concentration en molécules d'intérêt.

Les molécules d'intérêt sont alors plus facilement récupérées et incorporé par exemple dans des compositions cosmétiques. Le solvant d'extraction ainsi évaporé peut être avantageusement recyclé et réutilisé dans le procédé d'extraction.

**Brève description des dessins**

**Fig. 1**

[Fig. 1] montre un schéma du procédé d'extraction microfluidique selon un mode de réalisation de l'invention.

**Fig. 2**

[Fig. 2] montre un schéma d'un canal principal de forme rectangulaire, selon un mode de réalisation de la présente invention.

**Fig. 3**

[Fig. 3] montre un schéma d'une puce microfluidique avec un canal principal présentant un serpentin, selon un mode de réalisation de la présente invention.

**Fig. 4**

[Fig. 4] montre un schéma simplifié explicatif d'une puce microfluidique en double Y, selon un mode de réalisation de la présente invention.

**Fig 5**

[Fig. 5] présente les chromatogramme HPLC d'une huile de café présentant des molécules d'intérêt, le chromatogramme HPLC d'une extraction de ladite huile selon un mode de réalisation de la présente invention et un chromatogramme HPLC d'une extraction selon une méthode classique de distillation moléculaire.

**Exemples**

Procédé selon l'exemple

Le procédé d'extraction selon l'exemple comprend un dispositif tel qu'illustré en figure 1. Ledit procédé d'extraction comprend un contrôleur de pression **100,** ledit contrôleur de pression **100** est relié à un premier réservoir **R1** comprenant l'extrait végétal liquide **F1,** un second réservoir **R2** comprenant le solvant d'extraction **F2,** un premier collecteur **C1** récupérant le raffinat d'extrait végétal appauvri en molécule d'intérêt et un second collecteur **C2** récupérant l'extrait de solvant d'extraction enrichi en molécules d'intérêt.

Ledit procédé d'extraction comprend en outre une puce microfluidique en double Y **10** comprenant deux entrées **E1** et **E2** en liaison fluides avec respectivement les deux réservoirs **R1** et **R2** et deux sortie **S1** et **S2** en connexion fluide avec les deux collecteurs **C1** et **C2.**

Selon l'exemple 1, le contrôleur de pression **100** est de type Elveflow commercialisé par la société Elvesys. L'extrait végétal liquide **F1** est un extrait d'huile de café, les molécules d'intérêt sont des esters de diterpène et le solvant d'extraction **F2** est l'éthanol.

Le canal principal de la puce microfluidique 10 est de forme rectangulaire et présente un serpentin. Le canal a une profondeur de 100 $\mu$m, une largeur de 200 $\mu$m et son volume vaut 1 $\mu$L. Chacun des fluides partage la moitié du volume est, c'est-à-dire occupe 0,5 $\mu$L.

Etape a)

Le contrôleur de pression **100** est opéré de sorte que le fluide **F1** est soumis à une pression **P1** de 72 mbar de sorte que le débit du fluide **F1** vaut 0,01083 $\mu$L/s.
Le contrôleur de pression **100** est opéré de sorte que le fluide **F2** est soumis à une pression **P2** de 70 mbar de sorte que le débit du fluide **F2** vaut 0,679 $\mu$L/s.

Etape b)

L'extrait végétal liquide **F1** et le solvant d'extraction **F2** sont mis en contact au sein de la puce microfluidique pendant une durée d'environ 45 secondes.

Etape c)

Le solvant d'extraction **F2** enrichi en molécules d'intérêt est récupéré en sortie de la puce microfluidique **10** dans le collecteur **C2.**

Etape d)

Le procédé selon l'exemple comprend une étape D ou le solvant d'extraction F2 est évaporé avant de récupérer les molécules d'intérêt.

Résultat

Le rendement massique obtenu d'après le procédé d'extraction de l'exemple 1 est de 17,7%. L'extraction a été réalisée en continu pendant 2580min.
Ainsi, les inventeurs ont découvert de façon surprenant qu'un procédé d'extraction liquide-liquide mettant en oeuvre une puce microfluidique permet d'obtenir un rendement massique d'extraction supérieur ou égal aux rendements d'extraction usuellement utilisé, par exemple la distillation moléculaire ou l'extraction liquide-liquide en mode batch.

Exemple comparatif avec la distillation moléculaire

Un exemple comparatif a été réalisé afin de comparer les résultats d'extraction selon le procédé de l'invention avec des résultats d'extraction obtenus selon une extraction classique par distillation moléculaire.
La figure 5 illustre les chromatogrammes HPLC de l'huile de départ. Les molécules d'intérêt sont dans cet exemple des esters de diterpènes, en faible concentration dans l'huile de café.
La distillation moléculaire est réalisée selon le mode opératoire suivant connu de l'homme du métier: la température de corps est fixée à 280°C, la température de condensation est de 80°C. Le débit d'huile est de 1,2 L/h pour une pression comprise entre 2,10 et 3 mbar :

- on a mis sous vide le système à une pression autour de $10^{-3}$ et $10^{-2}$ mbar
- on a chauffé le corps de distillation à 280°C
- on a chauffé le condenseur à 80°C
- on a rempli la cuve d'alimentation en huile végétale (fluide à extraire) et fixé I débit d'alimentation à 1,2L/h

L'huile va être raclée contre la paroi du corps de distillation pendant une dizaine de seconde (entre 10 et 20 secondes). Les molécules d'intérêt vont s'évaporer et se recondenser sur le condenseur situé au centre du corps de distillation
Les deux fractions sont séparées par le système et récoltées dans deux contenants différents.
L'extrait obtenu après distillation moléculaire permet d'augmenter la concentration en molécules d'intérêt comme on peut le voir sur le chromatogramme HPLC de l'extrait obtenu par distillation moléculaire (figure 5).
Le chromatogramme HPLC de l'extrait éthanolique obtenu au moyen du procédé selon l'invention permet de comparer les deux méthodes d'extraction discutées dans cet exemple.
On peut voir sur le chromatogramme HPLC de l'extrait éthanolique obtenu au moyen du procédé selon l'invention, que les molécules d'intérêt y sont concentrées de manière plus efficace que par distillation moléculaire. En effet, le rendement obtenu à l'issu d'un premier passage par distillation moléculaire est compris entre 12 et 15 %. Il est donc nécessaire de faire 2 passages en distillation moléculaire pour extraire entièrement les molécules d'intérêts et obtenir un rendement final (et maximal) de 25% obtenu. Un seul passage est suffisant avec l'extraction microfluidique.

L'extraction mise en oeuvre selon un mode de réalisation de la présente invention présente en outre l'avantage de faire apparaître de nouvelles molécules (potentiellement d'intérêt) comme le montrent les pics du chromatogramme situés aux alentours de 7 min.

Ainsi, les chromatogrammes HPLC démontrent bien que l'efficacité de procédé selon l'invention est au moins équivalente aux très bons résultats obtenus par distillation moléculaire, avec des coûts opératoires significativement réduits. La présente invention présente, en outre, l'avantage de permettre l'extraction de nouvelles molécules que la distillation moléculaire ne permettait pas d'isoler.

**Liste des signes de référence**

- **10** : puce microfluidique
- **100** : contrôleur de pression
- **F1** : premier fluide, par exemple le solvant d'extraction
- **F2** : second fluide, par exemple l'extrait végétal liquide
- **E1** : entrée du fluide F1 dans la puce microfluidique
- **E2** : entrée du fluide F2 dans la puce microfluidique
- **F1** : sortie du fluide F1 de la puce microfluidique
- **F2** : sortie du fluide F2 de la puce microfluidique
- **R1** : réservoir du fluide F1
- **R2** : réservoir du fluide F2
- **C1** : collecteur du fluide F1 enrichi ou appauvri en molécule d'intérêt
- **C2 :** collecteur du fluide F2 enrichi ou appauvri en molécule d'intérêt
- **PJ** : point de jonction
- **PD** : point de disjonction
- **L** : longueur du canal principal
- **h** : profondeur du canal principal
- **1** : largeur du canal principal
- $Q_1$ : débit du fluide F1 dans la puce microfluidique
- $Q_2$ : débit du fluide F2 dans la puce microfluidique
- $w_1$ : largeur occupée par le fluide F1 dans le canal principal
- $w_2$ : largeur occupée par le fluide F2 dans le canal principal.

**Revendications**

1. Procédé d'extraction microfluidique de molécules d'intérêt à partir d'un extrait végétal liquide comprenant :

   - une puce microfluidique 10 avec un circuit en double Y, comprenant deux entrées E1 et E2, deux sorties S1 et S2 et un canal principal,
   - un premier réservoir R1 comprenant l'extrait végétal liquide F1, un second réservoir R2 comprenant un solvant d'extraction F2 des molécules d'intérêt non miscible avec l'extrait végétal liquide F1, lesdits premier et second réservoirs R1, R2 étant chacun en liaison fluide avec les entrées E1 et E2 de la puce microfluidique 10,
   - un contrôleur de pression 100 apte à mettre sous pression ledit premier extrait végétal liquide F1 et ledit solvant d'extraction F2,
   - un premier collecteur C1 en connexion fluide avec la puce microfluidique 10 dans lequel est récupéré l'extrait végétal liquide F1 appauvri en molécules d'intérêt,
   - un second collecteur C2 en connexion fluide avec la puce microfluidique 10 dans lequel est récupéré le solvant d'extraction F2 enrichi en molécules d'intérêt,
   ledit procédé d'extraction comprenant les étapes suivantes,

      a) le contrôle des pressions P1 et P2 afin de soumettre l'extrait végétal liquide F1 à une pression P1 et le solvant d'extraction F2 à une pression P2, de manière à ce que l'interface entre les deux fluides se positionne au niveau du point de jonction des entrées E1 et E2,

b) la mise en contact de l'extrait végétal liquide F1 et du solvant d'extraction F2 dans le canal principal pendant une durée permettant l'extraction des molécules d'intérêt,

c) la récupération du solvant d'extraction F2 enrichi en molécules d'intérêt,

et

d) optionnellement, l'évaporation du solvant d'extraction F2, **caractérisé en ce que** l'extrait végétal est une huile végétale, le solvant d'extraction est l'éthanol.

**2.** Procédé selon la revendication 1, où l'extraction est opérée à température ambiante, de préférence entre 20 et 30°C, de préférence entre 22 et 27°C.

**3.** Procédé selon l'une quelconque des revendications précédentes 1 à 2, où le contrôleur de pression 100 est opéré de sorte que le débit en sortie de la puce microfluidique du solvant d'extraction Q2 est compris entre 0,01 $\mu$L/s et 500 $\mu$L/s, de préférence entre 0,1 $\mu$L/s et 12 $\mu$L/s, plus préférentiellement entre 0,5 et 1 $\mu$L/s.

**4.** Procédé selon l'une quelconque des revendications précédentes 1 à 3, où le contrôleur de pression 100 est opéré de sorte que le débit en sortie de la puce microfluidique de l'extrait végétal liquide Q1 est compris entre 0,001 $\mu$L/s et 500 $\mu$L/s, de préférence entre 0,005 $\mu$L/s et 10 $\mu$L/s, plus préférentiellement entre 0,005 et 0,01 $\mu$L/s.

**5.** Procédé selon l'une quelconque des revendications précédentes 1 à 3, où la puce microfluidique 10 est **caractérisée en ce que** les canaux d'entrées se joignent en un point de jonction PJ pour former un seul canal principal, ledit canal présentant

- une largeur comprise entre 50 et 500 $\mu$m, de préférence entre 100 et 300$\mu$m, et de préférence de 200$\mu$m,
- une profondeur **H** comprise entre 1 et 800$\mu$m, de préférence 5 à 500$\mu$m, plus préférentiellement 10 à 200$\mu$m, mieux encore 50 et 150 $\mu$m, et plus particulièrement 100$\mu$m,
- un volume total **V** du canal entre le point de jonction PJ et la disjonction des deux canaux de sortie du Y au point de disjonction PD compris entre 0,1$\mu$L et 20$\mu$L, de préférence 0,2$\mu$L et 10$\mu$L, plus préférentiellement 0,3 et 5 $\mu$L, mieux encore 0,4 et 1,5 $\mu$L, plus particulièrement 1 $\mu$L.

**6.** Procédé selon l'une quelconque des revendications précédentes 1 à 5, où la puce microfluidique 10 est réalisée dans un matériau choisi parmi le verre, le silicium ou un polymère, de préférence siliconé tel que le PDMS.

**7.** Procédé selon l'une quelconque des revendications 1 à 6 où le contrôleur de pression 100 est opéré à des couples de pression (P1, P2) de sorte que la condition w1=a.w2 au niveau du point de disjonction est respectée; $w_1$ et $w_2$ sont les largeurs occupées respectivement par les fluides F1 et F2 au sein du canal principal de la puce microfluidique, « a » étant un nombre réel positif compris entre 0 et 1 dans le cas où le fluide F1 est l'extrait d'huile végétal, de préférence a est compris entre 0,85 et 0,95 et a correspond à une marge de sécurité.

**8.** Procédé selon l'une quelconque des revendications précédentes 1 à 7, où au moins N puces microfluidiques 10 avec un circuit en double Y sont opérées en parallèle, N étant un entier compris entre 1 et 200 000.

**Patentansprüche**

**1.** Verfahren zur mikrofluidischen Extraktion von betreffenden Molekülen aus einem flüssigen Pflanzenextrakt, umfassend:

- einen Mikrofluidik-Chip 10 mit einem Doppel-Y-Kreislauf, der zwei Eingänge E1 und E2, zwei Ausgänge S1 und S2 und einen Hauptkanal umfasst,
- einen ersten Behälter R1, der den flüssigen Pflanzenextrakt F1 umfasst, einen zweiten Behälter R2, der ein Lösungsmittel F2 zur Extraktion der betreffenden Moleküle umfasst, nicht mischbar mit dem flüssigen Pflanzenextrakt F1, wobei der erste und der zweite Behälter R1, R2 jeweils in Fluidverbindung mit den Eingängen E1 und E2 des Mikrofluidik-Chips 10 stehen,
- einen Druckregler 100, der dazu geeignet ist, den ersten flüssigen Pflanzenextrakt F1 und das Extraktionslösungsmittel F2 unter Druck zu setzen,
- einen ersten Kollektor C1 in Fluidverbindung mit dem Mikrofluidik-Chip 10, in dem der an betreffenden Molekülen verarmte flüssige Pflanzenextrakt F1 gewonnen wird,

- einen zweiten Kollektor C2 in Fluidverbindung mit dem Mikrofluidik-Chip 10, in dem das mit betreffenden Molekülen angereicherte Extraktionslösungsmittel F2 gewonnen wird, wobei das Extraktionsverfahren die folgenden Schritte umfasst:

a) Steuerung der Druckpaare P1 und P2, um den flüssigen Pflanzenextrakt F1 einem Druck P1 und das Extraktionslösungsmittel F2 einem Druck P2 auszusetzen, so dass die Grenzfläche zwischen den beiden Fluiden am Verbindungspunkt der Eingänge E1 und E2 positioniert ist,
b) Inkontaktbringen des flüssigen Pflanzenextrakts F1 und des Extraktionslösungsmittels F2 im Hauptkanal für eine Zeitdauer, die die Extraktion der betreffenden Moleküle ermöglicht,
c) Gewinnung des mit den betreffenden Molekülen angereicherten Extraktionslösungsmittels F2,
d) optional Verdampfen des Extraktionslösungsmittels F2,

**dadurch gekennzeichnet, dass** der Pflanzenextrakt ein Pflanzenöl ist, und das Extraktionslösungsmittel Ethanol ist.

2. Verfahren nach Anspruch 1, wobei die Extraktion bei Raumtemperatur, bevorzugt zwischen 20 und 30°C, bevorzugt zwischen 22 und 27°C, durchgeführt wird.

3. Verfahren nach einem der vorhergehenden Ansprüche 1 bis 2, wobei der Druckregler 100 derart betrieben wird, dass die Durchflussrate des Extraktionslösungsmittels Q2 am Ausgang des Mikrofluidik-Chips zwischen 0,01 $\mu$l/s und 500 $\mu$l/s, bevorzugt zwischen 0,1 $\mu$l/s und 12 $\mu$l/s, besonders bevorzugt zwischen 0,5 und 1 $\mu$l/s, liegt.

4. Verfahren nach einem der vorhergehenden Ansprüche 1 bis 3, wobei der Druckregler 100 derart betrieben wird, dass die Durchflussrate des flüssigen Pflanzenextrakts Q1 am Ausgang des Mikrofluidik-Chips zwischen 0,001 $\mu$l/s und 500 $\mu$l/s, bevorzugt zwischen 0,005 $\mu$l/s und 10 $\mu$l/s, besonders bevorzugt zwischen 0,005 und 0,01 $\mu$l/s, liegt.

5. Verfahren nach einem der vorhergehenden Ansprüche 1 bis 3, wobei der Mikrofluidik-Chip 10 **dadurch gekennzeichnet ist, dass** sich die Eingangskanäle an einem Verbindungspunkt PJ verbinden, um einen einzelnen Hauptkanal zu bilden, wobei der Kanal Folgendes aufweist

- eine Breite zwischen 50 und 500 $\mu$m, bevorzugt zwischen 100 und 300 $\mu$m, und bevorzugt von 200 $\mu$m,
- eine Tiefe H zwischen 1 und 800 $\mu$m, bevorzugt zwischen 5 und 500 $\mu$m, besonders bevorzugt zwischen 10 und 200 $\mu$m, noch besser zwischen 50 und 150 $\mu$m und insbesondere von 100 $\mu$m,
- ein Gesamtvolumen V des Kanals zwischen dem Verbindungspunkt PJ und der Trennung der beiden Austrittskanäle des Y am Trennungspunkt PD zwischen 0,1 $\mu$l und 20 $\mu$l, bevorzugt zwischen 0,2 $\mu$l und 10 $\mu$l, besonders bevorzugt zwischen 0,3 und 5 $\mu$l, besser zwischen 0,4 und 1,5 $\mu$l, besonders bevorzugt bei 1 $\mu$l liegt.

6. Verfahren nach einem der vorhergehenden Ansprüche 1 bis 5, wobei der Mikrofluidik-Chip 10 aus einem Material gefertigt wird, das gewählt ist aus Glas, Silizium oder einem Polymer, bevorzugt einem silikonhaltigen Polymer wie PDMS.

7. Verfahren nach einem der Ansprüche 1 bis 6, wobei der Druckregler 100 bei Druckpaaren (P1, P2) betrieben wird, so dass die Bedingung $w_1 = a.w2$ am Trennungspunkt erfüllt ist; wobei $w_1$ und $w_2$ die Breiten sind, die von den Fluiden F1 bzw. F2 im Hauptkanal des Mikrofluidik-Chips eingenommen werden, wobei "a" eine positive reelle Zahl zwischen 0 und 1 ist, wenn das Fluid F1 der pflanzliche Ölextrakt ist, wobei a bevorzugt zwischen 0,85 und 0,95 liegt und a einer Sicherheitsmarge entspricht.

8. Verfahren nach einem der vorhergehenden Ansprüche 1 bis 7, wobei mindestens N Mikrofluidik-Chips 10 mit einer Doppel-Y-Schaltung parallel betrieben werden, wobei N eine ganze Zahl zwischen 1 und 200.000 ist.

**Claims**

1. Process for the microfluidic extraction of molecules of interest from a liquid plant extract, comprising:

- a microfluidic chip 10 with a double-Y-channel circuit, comprising two inlets E1 and E2, two outlets S1 and S2, and a main channel,
- a first vessel R1 comprising the liquid plant extract F1, a second vessel R2 comprising a solvent F2 for extracting the molecules of interest non miscible with the liquid plant extract F1, said first and second vessels R1, R2 each being in fluid connection with the inlets E1 and E2 of the microfluidic chip 10,
- a pressure controller 100 capable of pressurizing the first liquid plant extract F1 and said extraction solvent F2,
- a first collector C1 in fluid connection with the microfluidic chip 10, in which the liquid plant extract F1 depleted in molecules of interest is collected,
- a second collector C2 in fluid connection with the microfluidic chip 10, in which the extraction solvent F2 enriched in molecules of interest is collected,

said extraction process comprising the following steps:

a) controlling the pressures P1 and P2 in order to subject the liquid plant extract F1 to a pressure P1 and the extraction solvent F2 to a pressure P2, such that the interface between the two fluids is positioned at the junction point of inlets E1 and E2,
b) bringing the liquid plant extract F1 and the extraction solvent F2 into contact with each other in the main channel for a period of time enabling extraction of the molecules of interest,
c) collecting the extraction solvent F2 enriched in molecules of interest, and
d) optionally, evaporating the extraction solvent F2,

wherein the plant extract is a vegetable oil, the extraction solvent is ethanol.

2. Process according to claim 1, wherein the extraction is carried out at room temperature, preferably between 20 and 30°C, more preferably between 22 and 27°C.

3. Process according to any one of the preceding claims 1 to 2, wherein the pressure controller 100 is operated so that the flow rate Q2 of the extraction solvent exiting the microfluidic chip is between 0.01 $\mu$L/ s and 500 $\mu$L/s, preferably between 0.1 $\mu$L/s and 12 $\mu$L/s, more preferably between 0.5 and 1 $\mu$L/s.

4. Process according to any one of the preceding claims 1 to 3, wherein the pressure controller 100 is operated so that the flow rate Q1 of the vegetable oil exiting the microfluidic chip is between 0.001 $\mu$L/s and 500 $\mu$L/s, preferably between 0.005 $\mu$L/s and 10 $\mu$L/s, more preferably between 0.005 and 0.01 $\mu$L/s.

5. Process according to any one of the preceding claims 1 to 3, wherein the microfluidic chip 10 is **characterized in that** the inlet channels join at a junction point PJ to form a single main channel, said channel having

- a width between 50 and 500 $\mu$m, preferably between 100 and 300 $\mu$m, and preferably 200 $\mu$m,
- a depth **H** between 1 and 800 $\mu$m, preferably 5 and 500 $\mu$m, more preferably 10 and 200 $\mu$m, even more preferably 50 and 150 $\mu$m, and more particularly 100 $\mu$m,
- a total volume **V** of the channel, between the junction point PJ and the separation of the two outlet channels of the Y at the separation point PD, of between 0.1 $\mu$L and 20 $\mu$L, preferably 0.2 $\mu$L and 10 $\mu$L, more preferably 0.3 and 5 $\mu$L, even more preferably 0.4 and 1.5 $\mu$L, more particularly 1 $\mu$L.

6. Process according to any one of the preceding claims 1 to 5, wherein the microfluidic chip 10 is made of a material chosen among glass, silicon or a polymer, preferably silicon-based such as PDMS.

7. Process according to any one of claims 1 to 6, wherein the pressure controller 100 is operated at pairs of pressures (P1, P2) such that the condition w1=a.w2 at the separation point is satisfied; $w_1$ and $w_2$ being the widths respectively occupied by fluids F1 and F2 within the main channel of the microfluidic chip, "a" being a positive real number between 0 and 1, **a** preferably being between 0.85 and 0.95 and corresponding to a safety margin.

8. Process according to any one of the preceding claims 1 to 7, wherein at least N microfluidic chips 10 with a double-Y-channel circuit are operated in parallel, N being an integer between 1 and 200,000.

[Fig. 1]

[Fig. 2]

[Fig. 3]

[Fig. 4]

[Fig. 5]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9612541 A1
- CN 206372553 U
- US 6355693 B1

**Littérature non-brevet citée dans la description**

- A successive laminar flow extraction for plant medicine préparation by microfluidic chip. **QIN WEIWEI et al.** MICROFLUIDICS AND NANOFLUIDICS. SPRINGER, 30 Mars 2019, vol. 23, 1-8
- Selectively modified microfluidic chip for solvent extraction of Radix Salvia Miltiorrhiza using three-phase laminar flow to provide double liquid-liquid interface area. **XUAN MU et al.** MICROFLUIDICS AND NANOFLUIDICS. SPRINGER, 24 Décembre 2009, vol. 9, 365-373
- **KISHORE K. R. TETALA et al.** A three-phase microfluidic chip for rapid sample clean-up of alkaloids from plant extracts. *LAB ON A CHIP,* 01 Janvier 2009, vol. 9 (14), 2085
- Fractionation of orange essential oil using liquid-liquid extraction: Equilibrium data for model and real systems at 298. **GONÇALVES DANIEL et al.** FLUID PHASE EQUILIBRIA. ELSEVIER, 28 Avril 2015, vol. 399, 87-97
- **KOSHIMA CRISTINA C. et al.** Fractionation of Bergamot and Lavandin Crude Essential Oils by Solvent Extraction: Phase Equilibrium at 298.2 K. *JOURNAL OF CHEMICAL AND ENGINEERING DATA.,* 19 Décembre 2014, vol. 60 (1), 37-46
- **ARCE ALBERTO et al.** Citrus Essential Oil Deterpenation by Liquid-Liquid Extraction. *Canadian Journal of Chemical Engineering,* 01 Avril 2005, vol. 83 (2), 366-370